**Europäisches Patentamt**

**European Patent Office**

**Office européen des brevets**

(19)

(11) Veröffentlichungsnummer : **0 364 713 B1**

(12)

# EUROPÄISCHE PATENTSCHRIFT

(45) Veröffentlichungstag der Patentschrift :
**11.11.92 Patentblatt 92/46**

(51) Int. Cl.$^5$ : **B60G 15/07, B60G 11/14**

(21) Anmeldenummer : **89116303.2**

(22) Anmeldetag : **04.09.89**

(54) **Radaufhängung.**

(30) Priorität : **15.10.88 DE 3835225**

(43) Veröffentlichungstag der Anmeldung :
**25.04.90 Patentblatt 90/17**

(45) Bekanntmachung des Hinweises auf die
Patenterteilung :
**11.11.92 Patentblatt 92/46**

(84) Benannte Vertragsstaaten :
**DE ES FR GB IT NL SE**

(56) Entgegenhaltungen :
**DE-A- 2 633 402**
**DE-A- 3 046 327**

(56) Entgegenhaltungen :
**DE-A- 3 625 284**
**DE-C- 3 405 174**
**FR-A- 2 251 450**
**GB-A- 2 137 146**
**J. REIMPELL: "Fahrwerktechnik: Radaufhängungen", Auflage 1, 1986, Seite 254, Vogel-Buchverlag, Würzburg, DE**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Schaible, Walter, Dipl.-Ing.**
**Schauchertstrasse 73**
**W-7251 Hemmingen (DE)**

**EP 0 364 713 B1**

**Beschreibung**

Die Erfindung bezieht sich auf eine Radaufhängung nach dem Oberbegriff des Anspruchs 1.

Aus dem Fachbuch "Fahrwerktechnik: Radaufhängungen" (Reimpell, J., Vogel-Verlag, Würzburg, 1. Auflage 1986, S. 254, Bild 6.2/3) ist eine Radaufhängung mit einem Federbein und einer einteiligen Schraubenfeder bekannt geworden, die zur Dämpferbeinachse schräg angeordnet ist, wodurch eine zumindest teilweise Kompensation einer Radaufstandskraft erreicht wird und eine Verringerung bzw. Aufhebung von Kolbenklemmkräften erzielbar ist. Desweiteren ist aus der GB-A-2 137 146 eine Radaufhängung mit einem Dämpferbein und einer das Bein umgebenden einteiligen Spiralfeder bekannt. Die Feder ist nahe an das Fahrzeugrad herangerückt und weist zur unbehinderten Drehung des Rades einen unteren und einen oberen Federabschnitt mit gleichmäßiger Windung auf, wobei ein zwischenliegender Abschnitt im Bereich eines Ringabschnitts des Reifens durch eine getrennte Windung der Feder gebildet wird.

Die einteiligen Schraubenfedern bewirken bei einer Anordnung entweder oberhalb des Rades eine große Bauhöhe des Federbeins oder bei einer Anordnung neben dem Rad einen relativ großen Lenkkrafthebelarm, was sich auf die Geradeauslaufeigenschaften des Fahrzeugs negativ auswirkt.

Eine Zweiteilung des Federelements und die Abstützung dieser in Reihe geschalteten Federelemente über ein Zwischenstück ist aus der DE-A- 34 05 174 bekannt. Bei dieser Ausführung ist ein oberes Federelement in Höhe des Abschnitts des Reifens angeordnet und das die beiden Federelemente verbindende Zwischenstück dient zur unbehinderten Durchführung einer Antriebswelle zum Rad. Die Federelemente sind bei dieser Ausführung neben dem Dämpferbein angeordnet, so daß der Bauraum zwischen den Rädern wesentlich verkleinert wird.

Aufgabe der Erfindung ist es, eine Radaufhängung mit einem Dämpferbein und einem Federelement zu schaffen, die bei einer Verminderung der Kolbenklemmkraft nur einen relativ geringen Bauraum zwischen den Rädern einer Achse beansprucht und eine niedrige Bauweise ermöglicht.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die zweigeteilte Feder und deren Anordnung nahe des Rades bzw. teilweise in der Felgenschüssel des Rades ein vergrößerter Bauraum zwischen den Rädern einer Achse sowie eine geringe Bauhöhe geschaffen wird. Die Federn sind hierzu über ein Zwischenelement, das im Bereich eines Ringabschnitts des Reifens angeordnet ist, miteinander in Reihe wirkend verbunden. Zur nahen Heranführung des Zwischenelements an das Rad ist dieses entsprechend ausgespart.

Die Verschiebung der Federachse des unteren Federelements gegenüber der Federachse des oberen Federelements zum Rad hin bewirkt eine der am aufbauseitigen Befestigungspunkt bei Geradeausfahrt stets vorhandenen Querkraft entgegengerichtete Kraft, die abhängig vom Beladungszustand eine Neutralisierung der Querkraft zur Folge haben kann. Verstärkt wird diese Kompensationswirkung durch die Verschiebung des unteren Führungsgelenkes nach außen ins Rad, da sich der Hebelarm der am Rad wirkenden Hochkraft verkürzt und damit insgesamt kleinere Lagerkräfte entstehen.

Ein Ausführungsbeispiel der Erfindung ist in der Zeichnung dargestellt und wird im folgenden näher beschrieben.

Es zeigen:

Fig. 1 eine Vorderansicht einer Radaufhängung mit zwei über ein Verbindungselement gehaltene Federteilstücke auf einem Dämpferbein und

Fig. 2 einen Schnitt durch das Verbindungselement nach der Linie II-II der Fig. 1.

Die Radaufhängung eines Fahrzeugs umfaßt im wesentlichen ein Radführungsglied 1 und ein mit dem Rad 2 an einem Radträger 3 verbundenes Federbein 4, das sich obenseitig am Fahrzeugaufbau 25 abstützt.

Das Federbein 4 besteht aus einem Dämpferbein 5 und einer zwei Federteilstücke 6 und 7 aufweisenden Schraubenfeder. Diese Federteilstücke 6 und 7 sind jeweils oberhalb und unterhalb eines Ringabschnitts 8 des Reifens 9 angeordnet und durch ein hülsenförmiges Zwischenelement 10 miteinander in Reihe geschaltet verbunden.

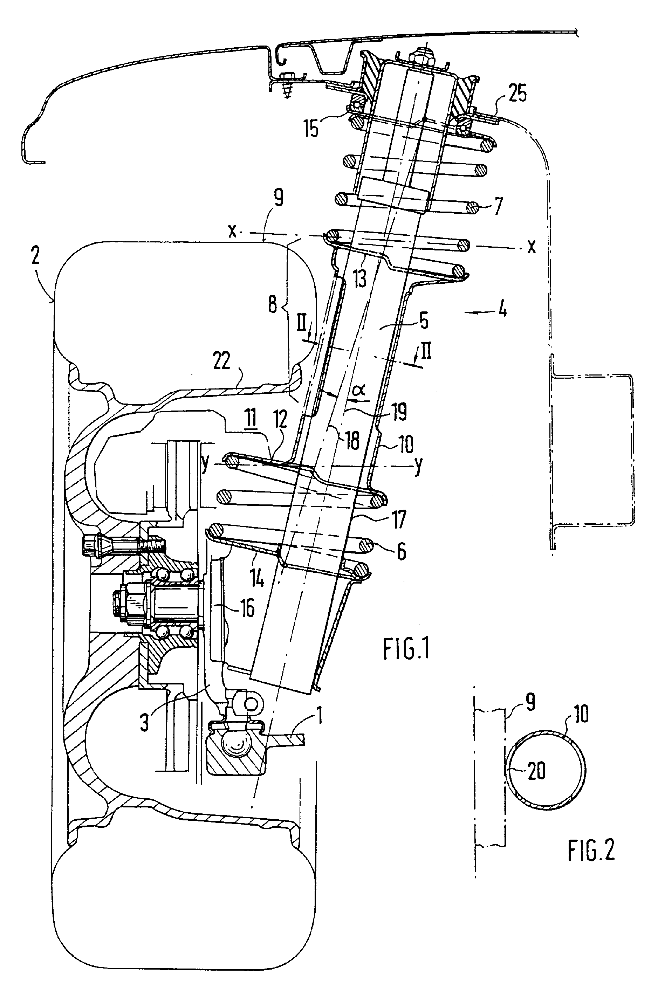

Das Zwischenelement 10 erstreckt sich in vertikaler Richtung über den Ringabschnitt 8 des Reifens und ist nahe an das Rad mit geringst möglichem seitlichen Abstand herangeführt, wie Fig. 1 näher zeigt.

In der Ausführung nach Fig. 1 sind die Federteilstücke 6 und 7 z.B. in Querrichtung versetzt zueinander angeordnet, derart, daß das untere Federteilstück 6 teilweise in einem Freiraum 11 der Radfelge 22 hineinragt. Das obere Federteilstück 7 ist dagegen zur Fahrzeugmittenlängsachse versetzt. Zur Abstützung der Federteilstücke 6 und 7 weist das Zwischenelement 10 an seinen beiden Enden jeweils entsprechend versetzt angeordnete Federteller 12 und 13 auf, die in der Ebene Y-Y und X-X angeordnet sind und denen die Federteller 14 und 15 am Radträger 16 bzw. am Dämpferrohr 17 gegenüberstehen. Zwischen den Ebenen X-X und Y-Y erstreckt sich das Zwischenelement 10.

Nach der Ausführung gemäß Fig. 1 bilden die Federteilstücke 6, 7 aufgrund ihrer versetzten Anordnung zueinander eine Federachse 18, die unter einem Winkel $\alpha$ zur Dämpferbeinachse 19 angestellt sein kann.

Die Federteilstücke 6 und 7 können nach einer nicht gezeigten Ausführung auch koaxial zum Dämpferbein 5 angeordnet werden. Möglich ist auch eine Anordnung, bei der die Federteilstücke 6 und 7 zu einer Seite, entweder zum Rad hin oder zur Fahrzeugmittenlängsachse hin gemeinsam versetzt sind und sich eine parallel zur Dämpferbeinachse angestellte Federachse ergibt.

Damit das hülsenförmige Zwischenelement 10 möglichst eine Position nahe der Räder einnimmt, weist es im Bereich des Ringabschnitts 8 des Reifens eine Aussparung 20 auf, die sich in Axial- und Querrichtung erstreckt.

Bei der dargestellten Ausführung ist das hülsenförmige Verbindungselement 10 koaxial auf das Dämpferrohr 17 mit Spiel angeordnet und die mit dem Element 10 verbundenen Federteller 12 und 13 sind beabstandet zum Reifen gehalten.

Bei der Verwendung eine kombinierten Federbeines, was nicht näher dargestellt ist, kann das obere Federteilstück 7 durch ein kennungs- und kraftregulierendes Federelement ersetzt werden, wie z.B. durch eine Luftfeder oder durch ein hydraulisch arbeitendes Federbein.

**Patentansprüche**

1. Radaufhängung für Kraftfahrzeuge mit einem Radführungsglied (1) und einem Federbein (4), dessen Federelement wenigstens zwei in Richtung einer Federachse (18) im Abstand zueinander liegende Federteilstücke (6 und 7) aufweist, die einen Freiraum (11) zwischen sich bilden und über ein Zwischenelement (10) miteinander verbunden sind, wobei die Federteilstücke (6, 7) jeweils oberhalb und unterhalb eines Ringabschnitts (8) des Reifens (9) angeordnet und über ein unmittelbar dem Abschnitt (8) benachbartes und sich etwa in vertikaler Richtung erstreckendes Zwischenelement (10) miteinander in Reihe geschaltet verbunden sind und das obere Federteilstück (7) gegenüber dem unteren Federteilstück (6) in Fahrzeugquerrichtung versetzt auf dem Zwischenelement (10) gehalten ist, derart, daß das untere Federteilstück (6) teilweise in einem Freiraum (11) der Radfelge (22) angeordnet ist, **gekennzeichnet durch** folgende Merkmale:
   a) das Zwischenelement (10) besteht aus einem hülsenförmigen Teil und weist zumindest eine Aussparung (20) an einer dem Ringabschnitt (8) zugewandten Seite auf.
   b) das Zwischenelement (10) umfaßt an seinen Enden versetzt angeordnete Federteller (12, 13), denen entsprechend angeordnete Federteller (14, 15) am Radträger (16) bzw. am Dämpferrohr (17) sowie am Fahrzeugaufbau (25) gegenüberstehen, zwischen denen die Federteilstücke (6, 7) eine Federachse (18) bildend angeordnet sind, welche unter einem Winkel ($\alpha$) zur Dämpferbeinachse (19) angestellt ist.

2. Radaufhängung nach Anspruch 1, **dadurch gekennzeichnet**, daß das hülsenförmige Zwischenelement (10) koaxial auf dem Dämpferrohr (17) angeordnet ist und die verbundenen Federteller (12, 13) jeweils beabstandet zum Ringabschnitt (8) des Rades (2) stehen.

3. Radaufhängung nach Anspruch 1, **dadurch gekennzeichnet**, daß das untere Federelement als Schraubenfeder und das obere Federelement als Luftfeder ausgeführt ist und beide Federn über das hülsenförmige Zwischenelement (10) verbunden sind.

**Claims**

1. A wheel suspension for motor vehicles, having a wheel guiding member (1) and a shock-absorbing leg (4) whereof the spring element has at least two spring portions (6 and 7) which are spaced from one another in the direction of a spring axis (18), form therebetween a free space (11) and are connected to one another by way of an intermediate element (10), the spring portions (6, 7) being arranged respectively below and above an annular section (8) of the tyre (9) and being connected to one another in series by way of an intermediate element (10) which is directly adjacent to the section (8) and extends approximately in the vertical direction, and the upper spring portion (7) being held on the intermediate element (10) offset in the transverse direction of the vehicle with respect to the lower spring portion (6) such that the lower spring portion (6) is arranged partly in a free space (11) of the wheel rim (22), characterized by the following features:
   a) the intermediate element (10) comprises a sleeve-shaped part and has at least one cutout (20) on a side facing the annular section (8),
   b) the intermediate element (10) includes spring plates (12, 13) which are offset at its ends and opposite which are correspondingly arranged spring plates (14, 15) on the wheel bearer (16) and on the absorber tube (17) as well as on the vehicle body (25), between which the spring portions (6, 7) are arranged to form a spring axis (18) which is set at an angle ($\alpha$) to the axis (19) of the absorber leg.

2. A wheel suspension according to Claim 1, characterized in that the sleeve-shaped intermediate element (10) is arranged coaxially on the absorber leg (17) and the connected spring plates (12, 13) are each spaced from the annular section (8) of the wheel (2).

3. A wheel suspension according to Claim 1, characterized in that the lower spring element is constructed as a helical spring and the upper spring element is constructed as an air spring and both springs are connected by way of the sleeve-shaped intermediate element (10).

**Revendications**

1. Suspension de roue pour véhicule automobile comportant un organe de guidage de roue (1) et une jambe de force à ressort (4) dont l'élément à ressort comprend au moins deux pièces (6 et 7) espacées l'une de l'autre en direction d'un axe de ressort (18), qui forment entre elles un espace libre (11) et qui sont assemblées entre elles par un élément intermédiaire (10), dans laquelle les pièces (6, 7) sont placées au-dessus et au-dessous d'une partie annulaire (8) du pneu (9) et sont montées en série entre elles, par un élément intermédiaire (10) s'étendant à peu près verticalement, directement voisin de la partie (8) et dans laquelle la pièce supérieure (7) de l'élément à ressort est maintenue sur l'élément intermédiaire (10), décalée dans la direction transversale du véhicule, par rapport à la pièce inférieure (6), de manière que la pièce inférieure (6) se trouve en partie dans un espace libre (11) de la jante de roue (22), caractérisée par les caractéristiques suivantes :
   a) l'élément intermédiaire (10) est constitué d'une partie en forme de douille et présente au moins une découpe (20) sur un côté tourné vers la partie annulaire (8) ;
   b) l'élément intermédiaire (10) comporte à ses extrémités des disques de ressort (12, 13) auxquels font face des disques de ressort (14, 15) disposés en correspondance sur le support de roue (16) ou le tube amortisseur (17) ainsi que sur la carrosserie (25) du véhicule, entre lesquels les pièces (6, 7) forment un axe de ressort (18) qui est incliné d'un angle (α) par rapport à l'axe (19) de la jambe de force d'amortisseur.

2. Suspension de roue selon la revendication 1, caractérisée en ce que l'élément intermédiaire (10) en forme de douille est coaxial au tube d'amortisseur (17) et les disques de ressort (12, 13) assemblés sont espacés de la partie annulaire (8) de la roue (2).

3. Suspension de roue selon la revendication 1, caractérisée en ce que l'élément à ressort inférieur est un ressort hélicoïdal et l'élément à ressort supérieur est un ressort pneumatique et les deux ressorts sont assemblés par l'élément intermédiaire (10) en forme de douille.

FIG.1

FIG.2